(19) Europäisches Patentamt
European Patent Office
Office européen des brevets

(11) **EP 3 228 910 A1**

(12) **EUROPÄISCHE PATENTANMELDUNG**

(43) Veröffentlichungstag:
**11.10.2017 Patentblatt 2017/41**

(51) Int Cl.:
*F16K 7/04* *(2006.01)* *F16K 27/00* *(2006.01)*
*F16K 31/00* *(2006.01)*

(21) Anmeldenummer: **17164132.7**

(22) Anmeldetag: **31.03.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **05.04.2016 DE 102016106211**

(71) Anmelder: **ABB Schweiz AG**
**5400 Baden (CH)**

(72) Erfinder:
• **Tabelander, Stefan**
**32052 Herford (DE)**

• **Stelter, Andreas**
**32423 Minden (DE)**
• **Wahlmann, Andreas**
**31715 Meerbeck (DE)**
• **Kresse, Heiko**
**31683 Obernkirchen (DE)**
• **Marks, Frank**
**40764 Langenfeld (DE)**

(74) Vertreter: **Marks, Frank**
**ABB AG / GF-IP**
**Oberhausener Str. 33**
**40472 Ratingen (DE)**

(54) **STEUERVENTIL FÜR FLUIDES MEDIUM**

(57) Steuerventil (1) für ein fluides Medium, umfassend einen Ventilkörper (3) mit einem Kanal (4), dessen Durchlassquerschnitt A durch Vorlegen einer Stellgröße (11) am Steuerventil (1) veränderlich ist, wobei mindestens ein Abschnitt (41) des Kanals (4) mit einem bandförmigen Querschnitt ausgebildet ist.

Es wurde erkannt, dass bei einem bandförmigen Querschnitt das Verhältnis des schaltbaren Durchlassquerschnitts A zum Schaltweg s, der von einem wie auch immer gearteten Steuerelement zurückzulegen ist, größer ist als beispielsweise bei einem Querschnitt in Form eines vollen Kreises oder einer vollen Ellipse. Dies hat zur Folge, dass ein vorgegebener Durchlassquerschnitt A mit einem geringeren Schaltweg s geschaltet werden kann. Dies wiederum bewirkt, dass das Schalten mit einem vorgegebenen Aktor schneller erfolgen kann.

Fig. 1

EP 3 228 910 A1

**Beschreibung**

Die Erfindung bezieht sich auf ein Steuerventil für ein fluides Medium, dessen Durchlassquerschnitt von einer Stellgröße abhängt.

Stand der Technik

In vielen industriellen Anwendungen ist ein Volumenstrom eines fluiden Mediums, wie beispielsweise Druckluft oder Wasser, in Abhängigkeit einer Stellgröße zu steuern. Hierfür werden Steuerventile verwendet, die von einer oder mehreren Steuereinheiten elektrisch ansteuerbar sind. Die Stellgröße wird also in der Regel als elektrische Stellgröße vorgelegt.

Um in Abhängigkeit von der elektrischen Stellgröße den Durchlassquerschnitt des Steuerventils zu verändern, wird innerhalb des Steuerventils ein Ventilelement in eine entsprechende Position bewegt. Hierfür wird ein pneumatischer Aktor verwendet. Der Aktor wird mit einem Druck beaufschlagt, der einer Druckquelle als quasi konstanter Steuerdruck entnommen und mit einem elektrischen Stellglied in Abhängigkeit der Stellgröße moduliert wird. Die Druckquelle kann beispielsweise ein Steuerdruckregler sein.

Das Stellglied kann beispielsweise ein I/P-Konverter sein, der einen Strom I in einen ausgangsseitigen Druck P umwandelt. Derartige I/P-Konverter werden beispielsweise in den am Markt verfügbaren elektropneumatischen Stellungsreglern TZIDC, EPD300 oder TEIP der Anmelderin verbaut. Optional wird mittels eines Sensors die erreichte Ist-Position des Ventilelements zurückgekoppelt, um eventuelle Abweichungen von der Soll-Position durch Anpassung des am Aktor vorgelegten Drucks auszuregeln.

Aufgabe und Lösung

Aufgabe der vorliegenden Erfindung ist, ein Steuerventil zur Verfügung zu stellen, dessen Schaltverhalten gegenüber dem bisherigen Stand der Technik optimiert ist bei gleichzeitig vereinfachter Ansteuerung.

Diese Aufgabe wird erfindungsgemäß gelöst durch ein Steuerventil gemäß Hauptanspruch. Weitere vorteilhafte Ausgestaltungen ergeben sich aus den darauf rückbezogenen Unteransprüchen.

Gegenstand der Erfindung

Im Rahmen der Erfindung wurde ein Steuerventil für ein fluides Medium entwickelt. Dieses Steuerventil umfasst einen Ventilkörper mit einem Kanal, dessen Durchlassquerschnitt A durch Vorlegen einer Stellgröße am Steuerventil veränderlich ist.

Erfindungsgemäß ist mindestens ein Abschnitt des Kanals mit einem bandförmigen Querschnitt ausgebildet. Dabei kann dieser Abschnitt in Reihe oder auch parallel zu anderen Abschnitten geschaltet sein, deren Querschnitt nicht bandförmig ist.

Unter einer bandförmigen Fläche wird allgemein eine Fläche verstanden, für die eine Länge und eine Breite definiert sind und die länger ist als breit. Dies impliziert jedoch nicht, dass der Begriff "Kanalabschnitt mit bandförmigem Querschnitt" eine Festlegung auf flache Strukturen beinhaltet. Vielmehr ist dieser Begriff davon unabhängig, inwieweit der Kanalabschnitt in der dritten Dimension senkrecht zur bandförmigen Querschnittsfläche fortgesetzt ist.

Es wurde erkannt, dass bei einem bandförmigen Querschnitt das Verhältnis des schaltbaren Durchlassquerschnitts **A** zum Schaltweg **s,** der von einem wie auch immer gearteten Steuerelement zurückzulegen ist, größer ist als beispielsweise bei einem Querschnitt in Form eines vollen Kreises oder einer vollen Ellipse. Dies hat zur Folge, dass ein vorgegebener Durchlassquerschnitt **A** mit einem geringeren Schaltweg **s** geschaltet werden kann. Dies wiederum bewirkt, dass das Schalten mit einem vorgegebenen Aktor schneller erfolgen kann.

Zugleich wird es aber auch möglich, Aktoren zu verwenden, die in Bezug auf ihr Schaltverhalten Vorteile versprechen, dafür jedoch nur einen geringen Schaltweg **s** überwinden können und somit bislang nicht als Option zur Verfügung standen. Dies können insbesondere beispielsweise Aktoren sein, die eine größere Schaltkraft ausüben können als die bislang eingesetzten Aktoren und zugleich konstruktiv deutlich vereinfacht sind. Eine größere Schaltkraft kann beispielsweise wichtig sein, wenn ein Absperrventil zum Absperren von Leitungswasser nur in Fehlerfällen, also nur sehr selten, betätigt wird. Hat sich beispielsweise Kalk aus dem Leitungswasser im Absperrventil angelagert, muss die Schaltkraft groß genug sein, um den durch die Verkalkung bewirkten Widerstand zu überwinden, damit das Absperrventil seine Sicherheitsfunktion erfüllen kann. In diesem Zusammenhang ist der geringere Schaltweg auch für sich genommen schon vorteilhaft, weil er die Gefahr für ein Verkanten und Verklemmen reduziert.

Nach dem bisherigen Stand der Technik stellte beispielsweise ein Kanal, dessen Querschnittsfläche ein Kreis mit Radius **R** ist, einen Durchlassquerschnitt $A=\pi*R^2$ zur Verfügung. Um diesen Kanal beispielsweise mit einem Schieber vollständig abzusperren, musste der Schieber über den ganzen Durchmesser des Kanals, also über eine Strecke **s=2R,** bewegt werden. Das Verhältnis von Durchlassquerschnitt **A** zu Schaltweg **s** war also **A/s=π*R/2.**

Ein Kanal in Form eines Kreisbandes zwischen dem Innenradius R und dem Außenradius R+ΔR stellt den Durchlassquerschnitt

$$A = \pi \cdot [(R + \Delta R)^2 - R^2] = \pi \cdot [R^2 + 2R \cdot \Delta R + \Delta R^2 - R^2] = \pi \cdot [2R \cdot \Delta R + \Delta R^2]$$

zur Verfügung. Um diesen bandförmigen Querschnitt vollständig abzusperren, muss ein Schaltweg s überwunden werden, der der Breite des bandförmigen Querschnitts entspricht, also s=ΔR. Das Verhältnis von Durchlassquerschnitt A zu Schaltweg s ist also

$$\frac{A}{s} = \pi \cdot \frac{2R \cdot \Delta R + \Delta R^2}{\Delta R} = \pi \cdot (2R + \Delta R)_.$$

Dieses Verhältnis ist größer als bei einem Kanal, dessen Querschnittsfläche ein Kreis ist. Es lässt sich außerdem ohne Verlängerung des Schaltwegs **s**=ΔR steigern, indem der Innenradius **R** erhöht wird.

Der bandförmige Querschnitt des Kanalabschnitts kann weiterhin genutzt werden, um dem Kanalabschnitt die Zusatzfunktion eines Siebes zu verleihen. Hierfür kann der Querschnitt so schmal ausgestaltet werden, dass die Wahrscheinlichkeit, dass ein Fremdkörper im passenden Winkel auf den Kanalabschnitt trifft und ihn passieren kann, drastisch herabgesetzt wird.

Für die technische Realisierung bietet ein Kanalabschnitt mit bandförmigem Querschnitt den weiteren Vorteil, dass Mittel zur Änderung des Querschnitts entlang der Länge des Kanalabschnitts verteilt sein können. Hat der Kanalabschnitt beispielsweise einen kreisringförmigen Querschnitt, so können die Mittel entlang des gesamten Umfangs des Kanalabschnitts verteilt sein.

Ein Kanalabschnitt mit bandförmigem Querschnitt lässt sich beispielsweise in einer besonders vorteilhaften Ausgestaltung der Erfindung realisieren, in der der Kanalabschnitt zwischen einem Innenumfang des Ventilkörpers und einem Außenumfang eines Strömungskörpers angeordnet ist. Dabei ist der Strömungskörper dazu ausgebildet, mindestens einen Teil der Strömung des Mediums in Richtung des Innenumfangs des Ventilkörpers zu lenken.

Vorteilhaft ist der Strömungskörper dazu ausgebildet, das Medium in einer laminaren Strömung in den Kanalabschnitt zu führen. Es werden dann Turbulenzen sowie Kavitation vermieden.

Der Kanalabschnitt mit bandförmigem Querschnitt kann insbesondere ein Spalt zwischen dem Innenumfang des Ventilkörpers und dem Außenumfang des Strömungskörpers sein.

Der Strömungskörper kann ein vom Ventilkörper separates Element sein, das innerhalb des Ventilkörpers in geeigneter Weise montiert ist. Der Strömungskörper kann aber auch beispielsweise zusammen mit dem Ventilkörper eine Einheit bilden und einstückig gefertigt sein, beispielsweise mittels 3D-Druck.

Vorteilhaft sind der Innenumfang des Ventilkörpers und der Außenumfang des Strömungskörpers im Bereich des Abschnitts jeweils kreisförmig oder elliptisch. Es gibt dann im Bereich des Abschnitts keine Ecken und Kanten, die Turbulenzen hervorrufen könnten oder in denen sich Ablagerungen aus dem fluiden Medium bevorzugt ansammeln könnten.

Der Durchlassquerschnitt des Kanalabschnitts kann nun beispielsweise in einer besonders vorteilhaften Ausgestaltung der Erfindung gesteuert werden, indem im Bereich des Kanalabschnitts der Innenumfang des Ventilkörpers, und/oder der Außenumfang des Strömungskörpers, durch Vorlegen der Stellgröße am Steuerventil veränderlich ist.

Hierfür können insbesondere Mittel zur Umsetzung der Stellgröße in eine Kraft **F** vorgesehen sein, die den Innenumfang des Ventilkörpers, und/oder den Außenumfang des Strömungskörpers, verändert. Eine solche Veränderung kann beispielsweise erfolgen, indem die Kraft F auf den Ventilkörper, und/oder auf den Strömungskörper, einwirkt. Alternativ oder auch in Kombination hierzu kann die Kraft **F** jedoch auch beispielsweise auf ein am Innenumfang des Ventilkörpers, und/oder am Außenumfang des Strömungskörpers, angeordnetes Steuerelement einwirken.

In den Mitteln zur Umsetzung der Stellgröße in die Kraft **F** können beispielsweise diejenigen Mittel weiterverwendet werden, die nach dem bisherigen Stand der Technik zur Ansteuerung pneumatischer Aktoren verwendet wurden. Die Mittel können also beispielsweise einen elektropneumatisch betätigbaren Aktor enthalten. Bereits eine solche einfache Ausgestaltung kommt in den Genuss der oben beschriebenen grundsätzlichen Vorteile eines verkürzten Schaltweges s.

In einer besonders vorteilhaften Ausgestaltung der Erfindung verändert die Kraft **F** die Form, Größe und/oder Materialdicke des Ventilkörpers, und/oder des Strömungskörpers, und/oder des Steuerelements. Den Durchlassquerschnitt des Kanalabschnitts auf diese Weise zu ändern hat den speziellen Vorteil, dass sich keine zwei Teile gegeneinander geführt bewegen müssen, wie dies beispielsweise in einem mit einem Schieber verschließbaren Ventil der Fall ist. Ein Verklemmen und Verkanten ist damit ausgeschlossen, und da keine Flächen aufeinander gleiten, ist auch keine Schmierung erforderlich.

Ein Synergieeffekt mit dem verkürzten Schaltweg **s** liegt darin, dass die Änderung der Form, Größe und/oder Materialdicke pro Einheit Kraft F insbesondere für metallische und keramische Werkstoffe, wie sie in Steuerventilen für Industrieanlagen zum Einsatz kommen, typischerweise sehr klein ist. Eine Änderung des Durchlassquerschnitts auf diesem Wege ist also nur um den Preis zu haben, dass der verfügbare Schaltweg **s** deutlich kleiner ist. Gemäß der Erfindung ermöglicht es aber gerade die bandförmige Ausgestaltung des Kanalabschnitts, mit einem solchen verkürzten Schaltweg **s** auszukommen.

Die Kraft **F** kann aber beispielsweise auch genutzt werden, um das Steuerelement zu bewegen und auf diese Weise zumindest lokal den Innenumfang des Ventilkörpers, und/oder den Außenumfang des Strömungskörpers, zu ändern. Der verkürzte Schaltweg **s** bietet dann den Vorteil, dass eine sehr kleine Bewegung des Steuerelements genügt.

In einer besonders vorteilhaften Ausgestaltung der Erfindung sind die Mittel dazu ausgebildet, eine elektrische Stellgröße mittels eines elektrischen Feldes E, eines elektromagnetischen Feldes **B,** und/oder durch Nutzung eines elektrostriktiven, magnetostriktiven oder piezoelektrischen Effekts, in die Kraft **F** umzusetzen. Diese Mechanismen erfordern keine gegeneinander gleitenden Teile und arbeiten somit verschleißfrei. Die Nutzung eines piezoelektrischen Effekts bietet darüber hinaus den Vorteil, dass die verfügbare Kraft **F** besonders groß wird, um den Preis eines im Vergleich zu anderen Antriebsarten deutlich kürzeren zur Verfügung stehenden Schaltwegs **s.** Dies aber ist im Kontext der Erfindung kein Nachteil mehr, da bereits ein geringer Schaltweg **s** genügt.

Darüber hinaus bietet die direkte Umsetzung einer elektrischen Stellgröße in die Kraft **F** ohne den Umweg über eine pneumatische Stufe mehrere grundsätzliche Vorteile. Zum Einen wird die Ansteuerung des Steuerventils konstruktiv wesentlich vereinfacht.

Der Steuerdruckregler als Druckquelle für die pneumatische Stufe entfällt ebenso wie ein Wandler mit bewegten Teilen, der den konstanten Steuerdruck entsprechend der Stellgröße am Steuerventil moduliert. Zum Anderen reagiert das Steuerventil deutlich schneller als ein elektropneumatisches Steuerventil, da die Verzugszeiten für die Umwandlung der elektrischen Stellgröße in eine andere Form von Hilfsenergie wegfallen. In einer geschlossenen Regelschleife kann so beispielsweise die Tendenz vermindert werden, dass die Regelschleife zu Schwingungen angeregt wird.

Der bandförmige Querschnitt des Kanalabschnitts ermöglicht es also letztlich über die Verminderung des nötigen Schaltweges **s**, eine am Steuerventil vorgelegte elektrische Stellgröße s ohne Umweg über eine andere Form von Hilfsenergie in diejenige Kraft **F** umzusetzen, die das Steuerventil öffnet oder schließt.

Als elektrostriktive Materialien sind beispielsweise insbesondere Relaxor-Ferroelektrika, und hier insbesondere Blei-Magnesium-Niobat (PMN), Blei-Magnesium-Niobat-Bleititanat (PMN-PT) sowie Blei-Lanthan-Zirkon-Titanat (PLZT) geeignet. Als piezoelektrische Materialien sind beispielsweise insbesondere Bleititanat, Lithiumniobat, Lithiumtantalat, Blei-Zirkon-Titanat (PZT), Bariumtitanat, Kaliumniobat , Natriumwolframat, Kalium-Natrium-Niobat, Bismutferrit, Natriumniobat, Bismuttitanat und Natriumbismuttitanat geeignet. Als magnetostriktive Materialien sind insbesondere Kobalt, Nickel sowie die Legierungen Terfenol-D, Alperm und Metglas 2605SC geeignet.

Die elektrische Stellgröße kann nach dem zuvor Gesagten sowohl vermittelt durch ein elektrisches Feld **E** als auch vermittelt durch ein magnetisches Feld **B** in die Kraft **F** umgesetzt werden, die das Steuerventil öffnet oder schließt. Dabei hat die Verwendung eines magnetischen Feldes **B** den Vorteil, dass dieses magnetische Feld **B** zusätzlich durch eine permanentmagnetische Komponente vorgespannt bzw. abgeändert werden kann. Hingegen hat die Verwendung eines elektrischen Feldes E den Vorteil, dass zu dessen Aufrechterhaltung kein ständiger Strom fließen muss und somit wesentlich weniger Energie dissipiert wird.

Vorteilhaft kann der Durchlassquerschnitt **A** ausgehend von einer Ruhelage, in der keine Stellgröße am Steuerventil anliegt, durch Vorlegen der Stellgröße sowohl erhöht als auch erniedrigt werden. In der Ruhelage wird dann keine Energiezufuhr benötigt.

Die Ruhelage kann beispielsweise so gewählt werden, dass sie dem Erwartungswert für diejenige Ventilstellung entspricht, in der das Steuerventil sich für den überwiegenden Teil der Betriebsdauer befindet. Es kann dann insgesamt Energie eingespart werden.

Spezieller Beschreibungsteil

Nachfolgend wird der Gegenstand der Erfindung anhand von Figuren erläutert, ohne dass der Gegenstand der Erfindung hierdurch beschränkt wird. Es ist gezeigt:

Figur 1: Skizze des Funktionsprinzips der Erfindung.

Figur 2: Ausführungsbeispiel des Steuerventils 1 mit durch ein elektrisches Feld **E** deformierbarem Strömungskörper **42.**

Figur 3:    Ausführungsbeispiel des Steuerventils 1 mit durch ein elektrisches Feld **E** deformierbarem Ventilkörper **3**.

Figur 4:    Ausführungsbeispiel des Steuerventils 1 mit durch ein elektrisches Feld **E** aufdickbarem Ventilkörper **3**.

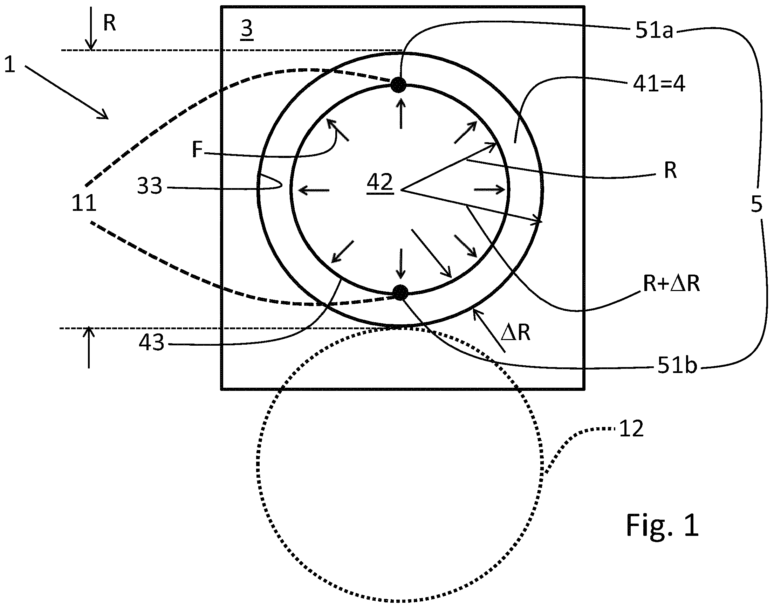

Figur 1 verdeutlicht das Funktionsprinzip der Erfindung an Hand einer Schnittzeichnung durch den Abschnitt **41** des Kanals **4,** in dem der Kanal **4** einen bandförmigen Querschnitt aufweist. Das von dem Steuerventil **1** gesteuerte fluide Medium **2** strömt in der in Figur 1 gewählten Perspektive aus der Zeichenebene heraus und ist in Figur 1 nicht eingezeichnet.

In dem Abschnitt **41** wird der Kanal **4** zwischen dem Innenumfang **33** des Ventilkörpers **3** und dem Außenumfang **43** des Strömungskörpers **42** eingeschlossen. Der Außenumfang **43** des Strömungskörpers **42** ist kreisförmig mit Radius **R.** Der Innenumfang **33** des Ventilkörpers **3** ist ebenfalls kreisförmig mit Radius **R+∆R.** Dementsprechend hat der zwischen Strömungskörper **42** und Ventilkörper 3 gebildete Spalt **41** die Breite **∆R.**

Der Ventilkörper **3** ist metallisch. Der Strömungskörper **42** besteht aus einem piezoelektrischen Material. Wird dieses Material über die Elektroden **51 a** und **51 b** mit einer Spannung beaufschlagt, wirkt eine radial nach außen gerichtete Kraft **F,** die das Volumen des Strömungskörpers **42** vergrößert. Dadurch bewegt sich der Außenumfang **43** des Strömungskörpers **42** auf den Innenumfang **33** des Ventilkörpers **3** zu, und der Spalt **41,** der den Kanalabschnitt bildet, wird schmaler. Dementsprechend wird der Durchfluss des Mediums **2** durch das Ventil **1** gedrosselt. Die Stärke der Drosselung hängt von der über die Elektroden **51 a** und **51b** angelegten Spannung ab. Somit ist diese Spannung die elektrische Stellgröße **11** des Ventils **1,** und die Elektroden **51a** und **51 b** gehören zu den Mitteln **5** zur Umsetzung der elektrischen Stellgröße **11** in die Kraft **F.** Bei maximaler Stellgröße **11** verschwindet der Spalt **41** zwischen dem Außenumfang **43** des Strömungskörpers **42** und dem Innenumfang **33** des Ventilkörpers **3,** so dass das Steuerventil **1** komplett geschlossen ist.

Zum Vergleich mit dem bisherigen Stand der Technik ist in Figur 1 noch ein kreisförmiger Schieber **12** gepunktet eingezeichnet. Um den Kanal **4** mit diesem Schieber **12** komplett zu verschließen, müsste dieser Schieber **12** die volle Strecke **R** überwinden. Dies ist antriebstechnisch deutlich aufwändiger als der Verschluss des Spalts **41** durch eine Volumenvergrößerung des Strömungskörpers **42.**

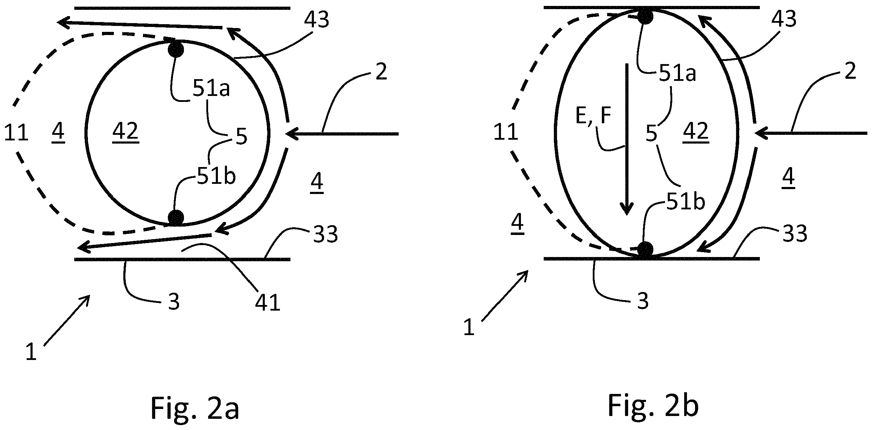

Figur 2 zeigt ein Ausführungsbeispiel des Steuerventils **1** in seitlicher Schnittansicht. Das von dem Steuerventil **1** gesteuerte fluide Medium **2** strömt in der in Figur 2 gewählten Perspektive in der Zeichenebene von rechts nach links.

In dem in Figur 2a gezeigten Schaltzustand ist die elektrische Stellgröße **11** gleich Null. Der Strömungskörper **42** befindet sich somit in seinem kugelförmigen Normalzustand. Der Kanal **4** wird durch den Strömungskörper **42,** der das strömende fluide Medium **2** zumindest teilweise in Richtung des Innenumfangs **33** des Ventilkörpers **3** lenkt, zu einem Spalt **41** zwischen dem Außenumfang **43** des Strömungskörpers **42** und dem Innenumfang **33** des Ventilkörpers **3** verjüngt. In diesem Abschnitt **41** umläuft der Kanal **4** somit sowohl den Innenumfang **33** des Ventilkörpers **3** als auch den Außenumfang **43** des Strömungskörpers **42,** so dass er einen bandförmigen Querschnitt aufweist.

Da an den Elektroden **51a** und **51 b** des Strömungskörpers **42** keine Spannung anliegt, ist der Spalt **41** vorhanden, und das Steuerventil **1** ist insgesamt durchlässig.

In dem in Figur 2b gezeigten Schaltzustand liegt eine maximale elektrische Stellgröße **11** in Form einer Spannung an den Elektroden **51a** und **51 b** des Strömungskörpers **42** an. Dadurch wird das dielektrische Material des Strömungskörpers **42** mit einem elektrischen Feld **E** durchsetzt. Es wird infolgedessen polarisiert, so dass der Strömungskörper **42** zu einem Ellipsoiden verzerrt wird. Der Außenumfang **43** des Strömungskörpers **42** kommt hierdurch am Innenumfang **33** des Ventilkörpers **3** zur Anlage, ohne dass sich noch ein Spalt **41** ausbildet. Der Kanal **4** ist damit vollständig verschlossen und die Strömung des fluiden Mediums **2** unterbrochen.

Die Elektroden **51 a** und **51 b** gehören somit zu den Mittel **5,** mit denen vermittelt durch das elektrische Feld E und die Polarisation des dielektrischen Materials des Strömungskörpers **42** letztlich die elektrische Stellgröße **11** in eine Kraft **F** umgewandelt wird, die den Außendurchmesser **43** des Strömungskörpers **42** verändert.

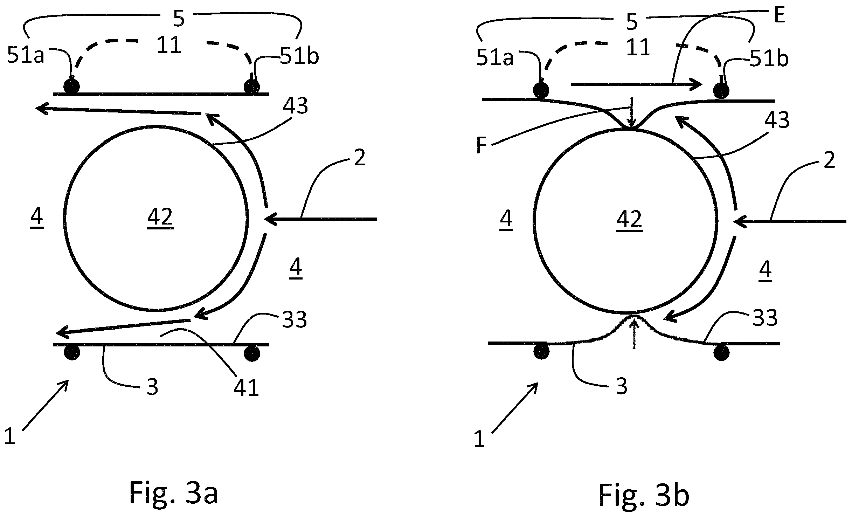

Figur 3 zeigt ein weiteres Ausführungsbeispiel des Steuerventils **1** in seitlicher Schnittzeichnung. Die Perspektive ist zu der von Figur 2 identisch. Im Unterschied zu Figur 2 ist hier jedoch nicht der Strömungskörper **42,** sondern der Ventilkörper **3** deformierbar ausgebildet. Zu diesem Zweck ist der Ventilkörper **3** aus einem piezoelektrischen Material gefertigt, das sich bei Anlegen einer Spannung zwischen den umlaufenden Elektroden **51a** und **51b** einschnürt**.**

In dem in Figur 3a gezeigten Schaltzustand ist die Stellgröße **11** gleich Null. Analog zu Figur 2a existiert somit ein Spalt **41** zwischen dem Außenumfang **43** des Strömungskörpers **42** und dem Innenumfang **33** des Ventilkörpers **3.** Das Steuerventil 1 ist für das strömende Medium **2** durchlässig geschaltet.

In dem in Figur 3b gezeigten Schaltzustand ist die Stellgröße **11** maximal. Infolgedessen wird das piezoelektrische Material des Ventilkörpers **3** mit einem axialen **E**-Feld zwischen den Elektroden **51a** und **51 b** beaufschlagt. Dadurch wird der Ventilkörper **3** im Bereich zwischen den Elektroden **51a** und **51 b** eingeschnürt. Im Bereich dieser Einschnürung kommt der Innenumfang **33** des Ventilkörpers **3** am Außenumfang **43** des Strömungskörpers **42** zur Anlage, so dass kein Spalt **41** existiert. Somit ist das Steuerventil **1** für das strömende Medium **2** undurchlässig geschaltet.

Die Elektroden **51a** und **51 b** gehören somit zu den Mitteln **5,** mit denen vermittelt durch das elektrische Feld **E** und den piezoelektrischen Effekt des Ventilkörpers **3** eine radiale Kraft **F** auf den Ventilkörper **3** ausgeübt wird, die diesen einschnürt und somit seinen Innenumfang **33** verändert.

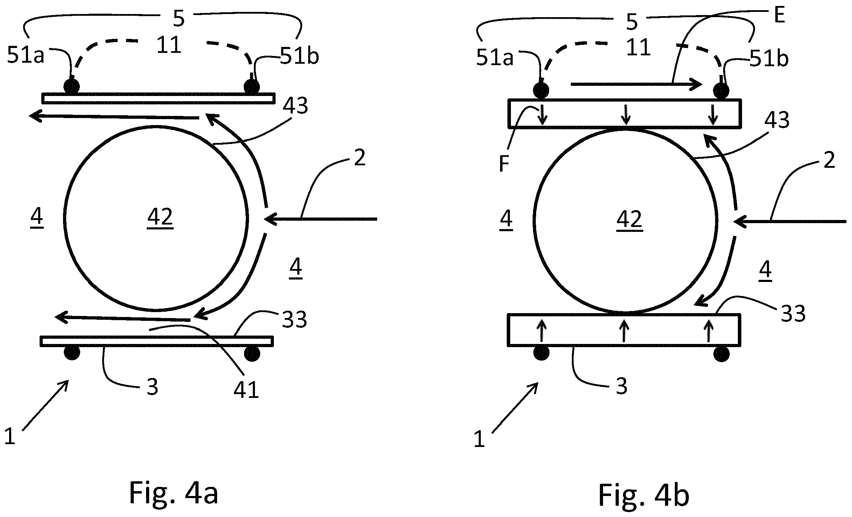

Figur 4 zeigt ein weiteres Ausführungsbeispiel der Erfindung. Die Perspektive ist zu der von Figur 2 und Figur 3 identisch. Analog zu Figur 3 ist das Material des Ventilkörpers **3** piezoelektrisch. Im Unterschied zu Figur 3 ist das Material jedoch dazu ausgebildet, sich unter dem Einfluss eines elektrischen Feldes **E** aufzudicken.

In dem in Figur 4a gezeigten Schaltzustand ist die Stellgröße **11** gleich Null. Somit hat das Material des Ventilkörpers **3** seine normale Dicke. Dadurch entsteht zwischen dem Innenumfang **33** des Ventilkörpers **3** und dem Außenumfang **43** des Strömungskörpers **42** ein umlaufender Spalt **41,** durch den das strömende Medium **2** das Steuerventil **1** passieren kann.

In dem in Figur 4b gezeigten Schaltzustand ist die Stellgröße **11** maximal. Das Material des Ventilkörpers **3** wird somit von einem axialen elektrischen Feld **E** durchsetzt. Dieses elektrische Feld **E** hat die Wirkung, dass innerhalb des Materials des Ventilkörpers **3** eine radial nach innen gerichtete Kraft **F** wirkt, die in axialer Richtung gleichmäßig verteilt ist und das Material aufdickt. Dadurch wird der Innenumfang **33** des Ventilkörpers **3** gleichmäßig verengt und kommt am Außenumfang **43** des Strömungselements **42** zur Anlage. Es fehlt ein Spalt **41,** und somit gibt es keinen Pfad mehr, auf dem das strömende Medium **2** das Steuerventil **1** passieren könnte. Das Steuerventil **1** ist undurchlässig.

Die Elektroden **51 a** und **51 b** gehören somit zu den Mitteln **5,** mit denen vermittelt durch das elektrische Feld **E** und den piezoelektrischen Effekt des Ventilkörpers **3** eine radiale Kraft **F** auf den Ventilkörper **3** ausgeübt wird, die diesen radial nach innen hin aufdickt und somit seinen Innenumfang **33** verändert.

**Bezugszeichenliste**

| | |
|---|---|
| 1 | Steuerventil |
| 2 | fluides Medium |
| 3 | Ventilkörper |
| 4 | Kanal |
| 5 | Mittel zur Umsetzung der Stellgröße 11 in die Kraft F |
| 11 | Stellgröße |
| 12 | Schieber |
| 33 | Innenumfang des Ventilkörpers 3 |
| 41 | Abschnitt des Kanals 4 mit bandförmigem Querschnitt |
| 42 | Strömungselement |
| 43 | Außenumfang des Strömungselements 42 |
| 51 | Steuerelement |
| 51a, 51b | Elektroden |
| A | Durchlassquerschnitt |
| B | magnetisches Feld |
| E | elektrisches Feld |
| F | Kraft |
| s | Schaltweg |
| R | Innenradius |
| ΔR | Spaltbreite |

**Patentansprüche**

1.  Steuerventil (1) für ein fluides Medium (2), umfassend einen Ventilkörper (3) mit einem Kanal (4), dessen Durchlassquerschnitt A durch Vorlegen einer Stellgröße (11) am Steuerventil (1) veränderlich ist,
    **dadurch gekennzeichnet,**
    **dass** mindestens ein Abschnitt (41) des Kanals (4) mit einem bandförmigen Querschnitt ausgebildet ist.

2.  Steuerventil (1) nach Anspruch 1,
    **dadurch gekennzeichnet,**
    **dass** der Abschnitt (41) des Kanals (4) zwischen einem Innenumfang (33) des Ventilkörpers (3) und einem Außenumfang (43) eines Strömungskörpers (42) angeordnet ist, wobei der Strömungskörper (42) dazu ausgebildet ist, mindestens einen Teil der Strömung des Mediums (2) in Richtung des Innenumfangs (33) des Ventilkörpers (3) zu lenken.

**3.** Steuerventil (1) nach Anspruch 2,
**dadurch gekennzeichnet,**
**dass** der Innenumfang (33) des Ventilkörpers (3) und der Außenumfang (43) des Strömungskörpers (42) im Bereich des Abschnitts (41) jeweils kreisförmig oder elliptisch sind.

**4.** Steuerventil (1) nach einem der Ansprüche 2 bis 3,
**dadurch gekennzeichnet,**
**dass** im Bereich des Abschnitts (41) des Kanals (4) der Innenumfang (33) des Ventilkörpers (3), und/oder der Außenumfang (43) des Strömungskörpers (42), durch Vorlegen der Stellgröße (11) am Steuerventil (1) veränderlich ist.

**5.** Steuerventil (1) nach Anspruch 4,
**dadurch gekennzeichnet,**
**dass** Mittel (5) zur Umsetzung der Stellgröße (11) in eine Kraft F vorgesehen sind, die den Innenumfang (33) des Ventilkörpers (3), und/oder den Außenumfang (43) des Strömungskörpers (42), verändert.

**6.** Steuerventil (1) nach Anspruch 5,
**dadurch gekennzeichnet,**
**dass** die Kraft F auf den Ventilkörper (3), und/oder auf den Strömungskörper (42), einwirkt.

**7.** Steuerventil (1) nach einem der Ansprüche 5 bis 6,
**dadurch gekennzeichnet,**
**dass** die Kraft F auf ein am Innenumfang (33) des Ventilkörpers (3), und/oder am Außenumfang (43) des Strömungskörpers (42), angeordnetes Steuerelement (51) einwirkt.

**8.** Steuerventil (1) nach einem der Ansprüche 5 bis 7,
**dadurch gekennzeichnet,**
**dass** die Kraft F die Form, Größe und/oder Materialdicke des Ventilkörpers (3), und/oder des Strömungskörpers (42), und/oder des Steuerelements (51), verändert.

**9.** Steuerventil (1) nach einem der Ansprüche 7 bis 8,
**dadurch gekennzeichnet,**
**dass** die Kraft F das Steuerelement (51) bewegt.

**10.** Steuerventil (1) nach einem der Ansprüche 5 bis 9,
**dadurch gekennzeichnet,**
**dass** die Mittel (5) dazu ausgebildet sind, eine elektrische Stellgröße (11) mittels eines elektrischen Feldes E, eines elektromagnetischen Feldes B, und/oder durch Nutzung eines elektrostriktiven, magnetostriktiven oder piezoelektrischen Effekts, in die Kraft F umzusetzen.

**11.** Steuerventil (1) nach einem der Ansprüche 2 bis 10,
**dadurch gekennzeichnet,**
**dass** der Strömungskörper dazu ausgebildet ist, das Medium (2) in einer laminaren Strömung in den Abschnitt (41) des Kanals (4) zu führen.

**12.** Steuerventil (1) nach einem der Ansprüche 1 bis 11,
**dadurch gekennzeichnet,**
**dass** der Durchlassquerschnitt A ausgehend von einer Ruhelage, in der keine Stellgröße (11) am Steuerventil (1) anliegt, durch Vorlegen der Stellgröße (11) sowohl erhöht als auch erniedrigt werden kann.

**13.** Steuerventil (1) nach einem der Ansprüche 1 bis 12,
**dadurch gekennzeichnet,**
**dass** es als Vorsteuerventil für einen pneumatischen Aktor ausgebildet ist.

Fig. 1

EP 3 228 910 A1

Fig. 2b

Fig. 2a

Fig. 3a

Fig. 3b

EP 3 228 910 A1

Fig. 4b

Fig. 4a

**Europäisches Patentamt**
**European Patent Office**
**Office européen des brevets**

# EUROPÄISCHER RECHERCHENBERICHT

Nummer der Anmeldung

EP 17 16 4132

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 148 117 A1 (KITZ CORP [JP]) 27. Januar 2010 (2010-01-27) * Absätze [0042], [0070], [0093], [0110], [0114]; Abbildungen 1-35 * ----- | 1-10,12, 13 | INV. F16K7/04 F16K27/00 F16K31/00 |
| X | WO 2011/144541 A1 (MINDRAY MEDICAL SWEDEN AB [SE]; CEWERS GOERAN [SE]) 24. November 2011 (2011-11-24) * Seite 9, Zeilen 28-33; Abbildungen 5,7 * * Seite 10, Zeilen 7-10 * * Seite 12, Zeilen 6-14, 25-29 * ----- | 1-13 | |
| X | EP 2 594 831 A1 (MINDRAY MEDICAL SWEDEN AB [SE]) 22. Mai 2013 (2013-05-22) * Absätze [0032], [0034], [0036], [0037]; Abbildungen 1-6b * ----- | 1-13 | |
| X | EP 1 284 760 A1 (ZEVEX INC [US]) 26. Februar 2003 (2003-02-26) * Absätze [0035], [0036], [0064]; Abbildungen 2a,2b,2c,5c * ----- | 1-4,11 | |
| | | | RECHERCHIERTE SACHGEBIETE (IPC) |
| A | DE 10 2008 057575 A1 (BAYERISCHE MOTOREN WERKE AG [DE]) 20. Mai 2010 (2010-05-20) * Absätze [0003], [0005]; Abbildungen 1a, 1b * ----- | 1,8 | F16K F16L |

Der vorliegende Recherchenbericht wurde für alle Patentansprüche erstellt

| Recherchenort | Abschlußdatum der Recherche | Prüfer |
|---|---|---|
| Den Haag | 20. Juli 2017 | París López, Rosa |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 4132

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-07-2017

| Im Recherchenbericht angeführtes Patentdokument | Datum der Veröffentlichung | Mitglied(er) der Patentfamilie | Datum der Veröffentlichung |
|---|---|---|---|
| EP 2148117 A1 | 27-01-2010 | CN 101680548 A | 24-03-2010 |
| | | CN 103557331 A | 05-02-2014 |
| | | EP 2148117 A1 | 27-01-2010 |
| | | JP 4394749 B2 | 06-01-2010 |
| | | JP 5431106 B2 | 05-03-2014 |
| | | JP 2010014279 A | 21-01-2010 |
| | | JP WO2008156150 A1 | 26-08-2010 |
| | | KR 20100023799 A | 04-03-2010 |
| | | US 2010051846 A1 | 04-03-2010 |
| | | US 2014013938 A1 | 16-01-2014 |
| | | WO 2008156150 A1 | 24-12-2008 |
| WO 2011144541 A1 | 24-11-2011 | KEINE | |
| EP 2594831 A1 | 22-05-2013 | CN 103120824 A | 29-05-2013 |
| | | EP 2594831 A1 | 22-05-2013 |
| | | US 2013146058 A1 | 13-06-2013 |
| EP 1284760 A1 | 26-02-2003 | AU 6114901 A | 20-11-2001 |
| | | CN 1437488 A | 20-08-2003 |
| | | EP 1284760 A1 | 26-02-2003 |
| | | JP 4166981 B2 | 15-10-2008 |
| | | JP 2003532499 A | 05-11-2003 |
| | | WO 0185231 A1 | 15-11-2001 |
| DE 102008057575 A1 | 20-05-2010 | DE 102008057575 A1 | 20-05-2010 |
| | | WO 2010054775 A1 | 20-05-2010 |

EPO FORM P0461

Für nähere Einzelheiten zu diesem Anhang : siehe Amtsblatt des Europäischen Patentamts, Nr.12/82